# EUROPEAN PATENT SPECIFICATION

(11) **EP 4 311 686 B1**
(45) Date of publication and mention of the grant of the patent: **01.01.2025**
(21) Application number: 22382720.5
(22) Date of filing: 27.07.2022
(51) Int. Cl.: B60B 7/06, B60B 7/08, B60B 7/04, B60B 7/20

(54) **WHEEL COVER**
RADZIERBLENDE
ENJOLIVEUR

(43) Date of publication of application: 31.01.2024
(73) Proprietor: Zanini Auto Grup, S.A., 08150 Parets del Vallès - Barcelona (ES)
(72) Inventor: NOVELL PERELLÓ, Ramon, 08150 PARETS DEL VALLÈS (Barcelona) (ES); DURAN BOFILL, Pedro, 08150 PARETS DEL VALLÈS (Barcelona) (ES); COROMINAS SERRAT, Xavier, 08150 PARETS DEL VALLÈS (Barcelona) (ES); LOSILLA BASSET, Eduardo, 08150 PARETS DEL VALLÈS (Barcelona) (ES); EGUINOA DE SAN ROMAN, Gonzalo, 08150 PARETS DEL VALLÈS (Barcelona) (ES)
(74) Representative: Herrero & Asociados, S.L.

(56) References cited:
- WO-A1-2013/169252
- US-A- 3 532 385
- US-A- 3 663 065

## Description

### Field of the invention

The present invention relates to a wheel cover, comprising retention elements for retaining the wheel cover to a wheel, that is particularly applicable to wheels of trucks

### Background of the invention

Traditionally the wheels of trucks did not use wheel covers, among other reasons because the wheels do not have a hump in the rim area, but recently they are being used not only for aesthetical reasons, but also for improving aerodynamics and reduce fuel consumption.

For example, wheel covers for trucks are disclosed in the following documents.

US 11,220,132 B2 discloses a retention system that uses metallic manually adjustable elements to adjust the wheel cover fixation devices to the wheel. Those elements are fixed in the drive shaft and are necessary in this solution because depth between the wheel disk and the wheel rim is different in every wheel and every truck.

WO 2013 169 252 A1 discloses a wheel cover with a plurality of retaining means, wherein a central rotating element is provided with a plurality of connecting elements and each connecting element is permanently and firmly connected to one of these retaining elements.

US 7,600,824 B2 discloses a retention system that uses metallic frames that by means of screw systems are adjusted to the diameter of the wheel hook, and the wheel cover has metallic clips that are assembled in corresponding holes of the frame. Other solutions use a wire that is positioned in the wheel rim flange and by means of screw systems are adapted to the diameter of the rim flange. Then, the wheel cover is screwed to metallic elements that are fixed in the above-mentioned special wire. All of them have the disadvantage that needs to be adjusted manually and requires different components to assemble or disassemble to/from the wheel, with the additional risk to be not properly adjusted.

### Disclosure of the invention

Therefore, there is a clear need for a wheel cover that can be fixed to a wheel that does not have a standard hump without the need of adapters or other components to be screwed on.

With the wheel cover of the present invention, the user does not need to use brackets or adapters that need to be manually adjusted for a given wheel. The wheel cover according to the present invention is compatible with wheels of a given size and is not affected by the different depths between the wheel disk and the wheel rim, because it is directly assembled to the wheel rim.

The wheel cover according to the present invention is defined in claim 1. Additional optional features are defined in the dependent claims.

In particular, the wheel cover comprises a plurality of retaining elements, and a central rotating element provided with a plurality of connecting elements, each connecting element attached to one of the retaining elements, said rotating element being rotatable between a rest position, in which the connecting elements allow the movement of the retaining elements towards the central rotating element, and an active position, in which the connecting elements push the retaining elements in a direction towards the perimeter of the wheel cover.

According to a preferred embodiment, the rotating element comprises an actuator and a spring, for rotating the rotating element from the rest position to the active position, or vice versa.

Preferably, the connecting elements can be elastic wires, and the retaining elements can be protruding pieces.

Advantageously, the connecting elements extend from the central rotating element close to the perimeter of the wheel cover.

Furthermore, the retaining elements are preferably uniformly angularly distributed with respect to the center of the wheel cover, and they are guided by a support.

Preferably, the support and the retaining elements are made in one plastic piece in the same injection operation with the rest of the wheel cover.

Furthermore, the support is preferably elastic, e.g., it is made by two elastic sheets.

### Brief description of the drawings

For better understanding of what has been disclosed, some drawings in which, schematically and only by way of a non-limiting example, a practical case of embodiment is shown.
Figure 1 is a schematic perspective view of a wheel cover according to the present invention from the front side;
Figure 2 is a schematic perspective view of a wheel cover according to the present invention from the back side;
Figure 3 is a back side view of the wheel cover according to the present invention positioned in the rest position;
Figure 4 is a back side view of the wheel cover according to the present invention in a free state and positioned in the active position;
Figure 5 is a section view of a truck wheel showing a hook area where the wheel cover according to the present invention can be fixed;
Figure 6 is a section view with the wheel cover according to the present invention positioned in the wheel in the rest position;
Figure 7 is a section view with the wheel cover according to the present invention attached or retained to the wheel in the active position;
Figure 8 is a back side view of the wheel cover according to the present invention positioned in the active position once is assembled in the wheel, with the wheel removed from the figure;
Figure 9 is a schematic section view of an embodiment of the rotating element of the wheel cover according to the present invention; and
Figure 10 is a section of an alloy wheel compatible with the wheel cover according to the present invention.

### Description of a preferred embodiment

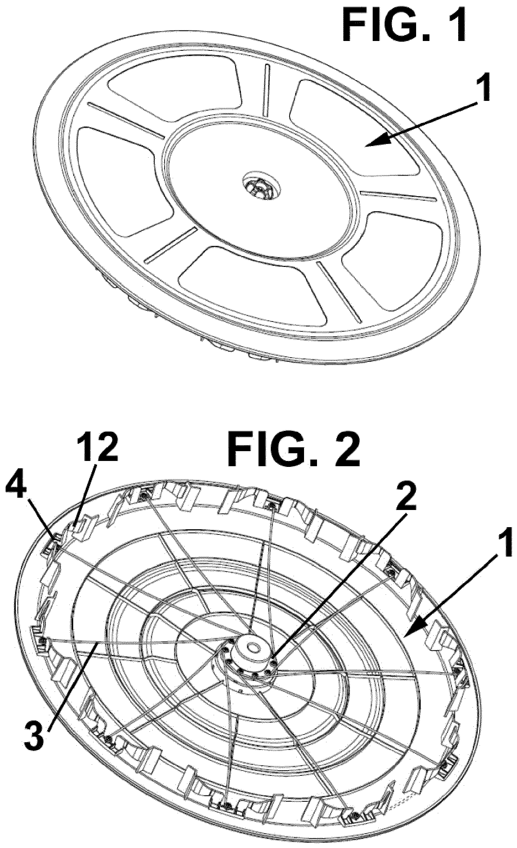

With reference to figures 1 and 2, there are shown perspective views of one embodiment of the wheel cover (1) according to the present invention from the front and rear sides, respectively.

The wheel cover (1) comprises a central rotating element (2), a plurality of connecting elements (3) that are attached to the rotating element (2) at one of their ends, and a plurality of retaining elements (4), that are attached to the connecting elements (3) at their end distal from the rotating element (2).

These retaining elements (4) can be, for example, protruding pieces that can be housed in a complementary recess of a wheel. The connecting elements (3) can be, for example, rigid or elastic wires that extend radially from the central rotating element (2) to the retaining elements (4) located to the perimeter of the wheel cover (1).

The rotating element (2) is rotatable between a rest position and an active position. In the rest position, the retaining elements (4) do not retain the wheel cover (1) to a wheel rim (5), and in the active position, the retaining elements (4) retain the wheel cover (1) to the wheel rim (5), as will be described hereinafter.

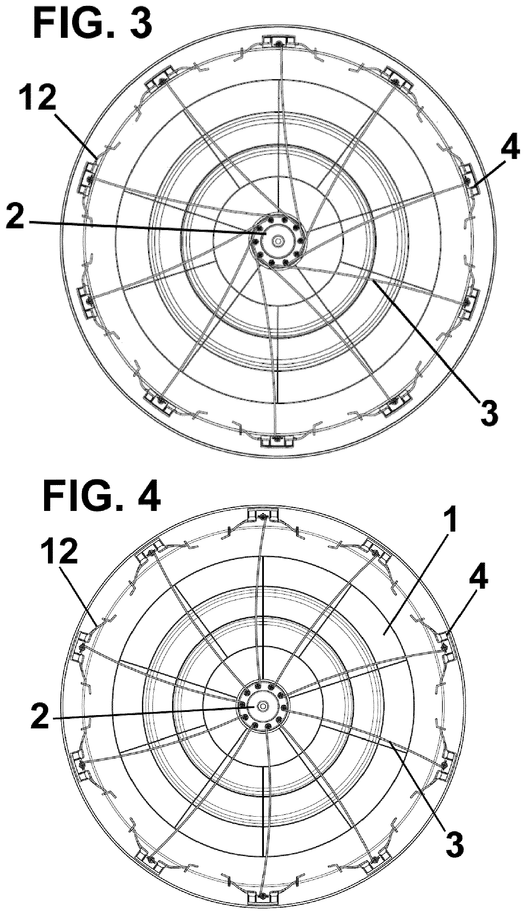

Figure 3 shows the wheel cover (1) in the rest position. In this position, the rotating element (2) allows the movement of the connecting elements (3), and the connecting elements (3) also allow the movement of the retaining elements (4) in a direction to the center of the wheel cover (1). In this rest position, a circumference defined by the retaining elements (4) has a reduced diameter.

Figure 4 shows the wheel cover (1) according to the present invention in the active position that is achieved rotating the rotating element (2) from the rest position. In the active position, the rotating element (2) pushes the connecting elements (3), and the connecting elements (3) push the retaining elements (4) in a direction towards the perimeter of the wheel cover (1). In this active position, the circumference defined by the retaining elements (4) has an increased diameter. So, when assembled on the wheel, the retaining elements (4) contact the wheel rim (5), retaining the wheel cover (1) to the wheel rim (5).

This is because the retaining elements (4) are uniformly angularly distributed with respect to the center of the wheel cover (1), and they are guided by a support (12), as shown in figures 2-4. Said support (12) can be a guide or an elastic sheet. It must be pointed out that the support (12) and the retaining elements (4) are preferably made in one plastic piece in the same injection operation with the rest of the wheel cover (1).

In the rest position, shown in figures 2 and 3, the proximal end of the connecting elements (3), i.e., the end attached to the rotating element (2) is angularly displaced with respect to the distal end of the connecting elements (3), i.e., the end attached to the retention element (4).

But in the active position, shown in figure 4, the proximal end of the connecting elements (3), i.e., the end attached to the rotating element (2) has a reduced angular displacement with respect to the distal end of the connecting elements (3), i.e., the end attached to the retention element (4).

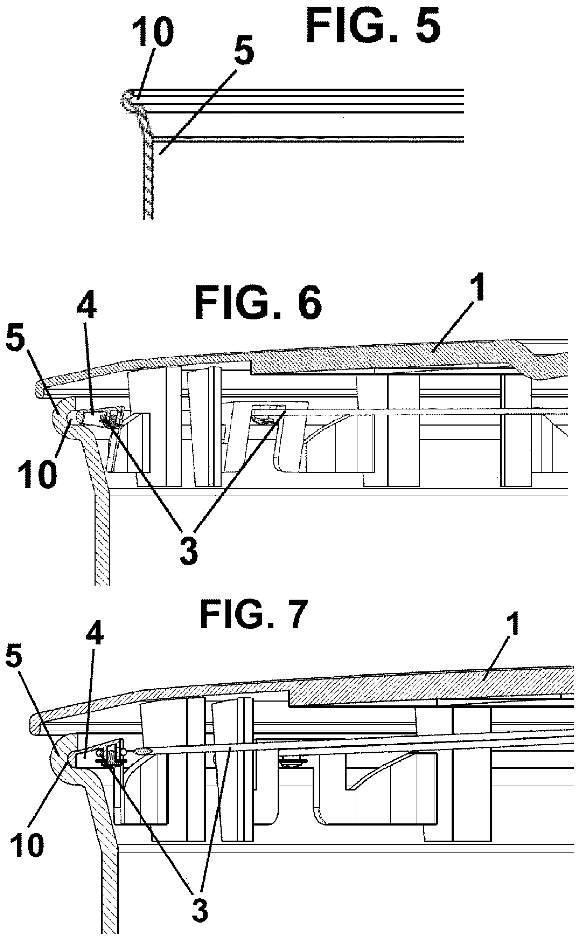

The profile of the wheel rim (5) according to the embodiment shown in figures 5 and 6 corresponds to the typical profile of a wheel used by trucks. As shown in these figures, the wheel rim (5) defines a peripheral hook (10).

As shown in figure 6, the diameter defined by the retaining elements (4) in the rest position is smaller than the internal diameter of the peripheral hook (10) defined in the rim (5) to facilitate the positioning of the wheel cover (1) in the wheel prior to activate the rotating element (2).

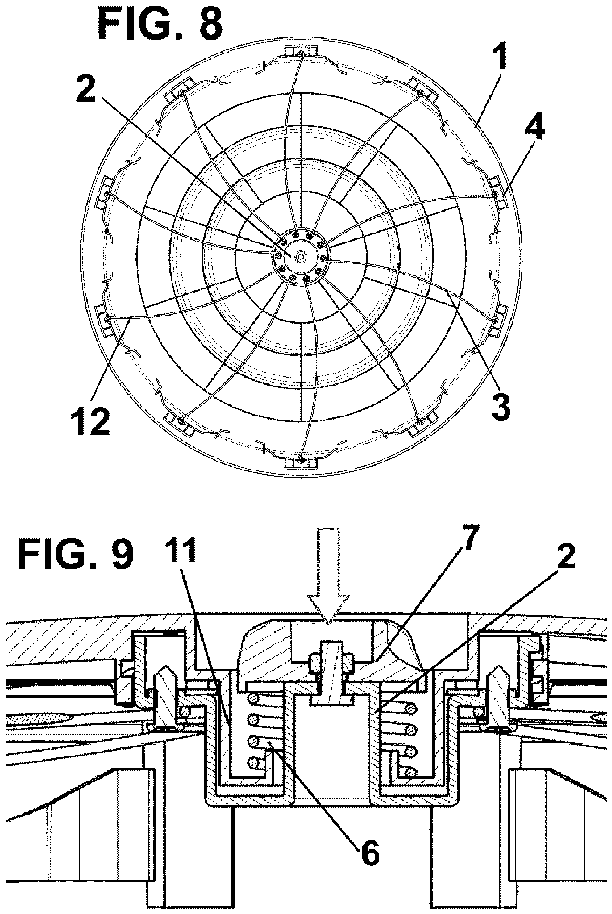

When the rotating element (2) is activated, as shown in figures 7 and 8, the outside diameter defined by the retaining elements (4) is limited by the rim (5), and therefore the connecting elements (3) apply a pressure in the retaining elements (4), that assures the retention of the wheel cover (1) into the wheel rim (5).

To better understand the functionality of the wheel cover (1) according to the present invention, figure 8 shows the wheel cover (1) in the active position having removed the wheel from the figure.

According to an embodiment, shown in figure 9, the rotating element (2) is mounted on a holder (11). According to this embodiment, the rotating element (2) comprises an actuator (7) and a spring (6).

When is necessary to install or remove the wheel cover (1), the actuator (7) is unlocked by pushing it according to the arrow and compressing the spring (6). In this condition, the rotating element (2) can be rotated, for example, from the rest position to the active position, and the spring (6) will push back the rotating element (2) and the actuator (7) to the lock position, in which the rotating element (2) is locked.

The actuator (7) can be moved by hand or with a standard tool, like for example a wrench.

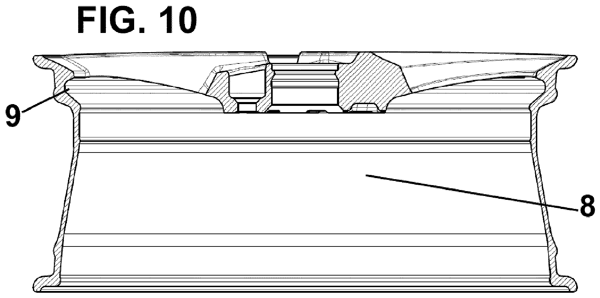

The same solution can be used for any wheel (8) having an undercut (9) at the rim area, like the example of Figure 10, as well as with any wheel with a standard hump.

## Claims

1. Wheel cover (1), comprising a plurality of retaining elements (4), the wheel cover (1) also comprises:
a central rotating element (2) provided with a plurality of connecting elements (3), each connecting element (3) attached to one of the retaining elements (4), **characterized by**
said rotating element (2) being rotatable between a rest position, in which the connecting elements (3) allow the movement of the retaining elements (3) towards the central rotating element (2), and an active position, in which the connecting elements (3) push the retaining elements (4) in a direction towards the perimeter of the wheel cover (1).

2. Wheel cover (1) according to claim 1, wherein connecting elements (3) are elastic elements.

3. Wheel cover (1) according to claim 1, wherein the rotating element (2) comprises an actuator (7) and a spring (6), for rotating the rotating element (2) from the rest position to the active position, or vice versa.

4. Wheel cover (1) according to claim 1 or 2, wherein the connecting elements (3) are elastic wires.

5. Wheel cover (1) according to claim 1, wherein the retaining elements (4) are protruding pieces.

6. Wheel cover (1) according to any one of the previous claims, wherein the connecting elements (3) extend radially from the central rotating element (2) to retaining elements (4) located to the perimeter of the wheel cover (1).

7. Wheel cover (1) according to any one of the previous claims, wherein the retaining elements (4) are uniformly angularly distributed with respect to the center of the wheel cover (1)

8. Wheel cover according to any one of the previous claims, wherein each of the retaining elements (4) is guided by a support (12).

9. Wheel cover according to claim 8, wherein the support (12) and the retaining elements (4) are made in one plastic piece in the same injection operation with the rest of the wheel cover (1).

10. Wheel cover (1) according claim 8 or 9, wherein the support (12) is elastic.

11. Wheel cover (1) according to claim 10, wherein the support (12) is made by two elastic sheets.

## Patentansprüche

1. Radabdeckung (1), umfassend eine Vielzahl von Halteelementen (4), die Radabdeckung (1) umfasst ferner:
Ein zentrales Drehelement (2), das mit einer Vielzahl von Verbindungselementen (3) verbunden ist, jedes Verbindungselement (3) ist an einem der Halteelemente (4) befestigt,
**dadurch gekennzeichnet dass**
das Drehelement (2) zwischen einer Ruheposition, in der die Verbindungselemente (3) die Bewegung der Halteelemente (4) zu dem zentralen Drehelement (2) erlauben, und einer aktiven Position, in der die Verbindungselemente (3) die Halteelemente (4) in eine Richtung zum Umfang der Radabdeckung (1) drücken, drehbar ist.

2. Radabdeckung (1) nach Anspruch 1, wobei die Verbindungselemente (3) elastische Elemente sind.

3. Radabdeckung (1) nach Anspruch 1, wobei das Drehelement (2) einen Aktuator (7) und eine Feder (6) umfasst, um das Drehelement (2) aus der Ruheposition in die aktive Position oder umgekehrt zu drehen.

4. Radabdeckung (1) nach Anspruch 1 oder 2, wobei die Verbindungselemente (3) elastische Drähte sind.

5. Radabdeckung (1) nach Anspruch 1, wobei die Halteelemente (4) vorspringende Teile sind.

6. Radabdeckung (1) nach einem der vorstehenden Ansprüche, wobei sich die Verbindungselemente (3) radial von dem zentralen Drehelement (2) zu den Halteelementen (4) an dem Umfang der Radabdeckung (1) erstrecken.

7. Radabdeckung (1) nach einem der vorstehenden Ansprüche, wobei die Halteelemente (4) gleichmäßig winkelförmig im Verhältnis zum Zentrum der Radabdeckung (1) verteilt sind.

8. Radabdeckung nach einem der vorstehenden Ansprüche, wobei jedes der Halteelemente (4) von einer Halterung (12) geführt wird.

9. Radabdeckung nach Anspruch 8, wobei die Halterung (12) und die Halteelemente (4) aus einem Kunststoffteil bestehen, das in demselben Spritzgießvorgang mit dem Rest der Radabdeckung (1) hergestellt ist.

10. Radabdeckung (1) nach Anspruch 8 oder 9, wobei die Halterung (12) elastisch ist.

11. Radabdeckung (1) nach Anspruch 10, wobei die Halterung (12) aus zwei elastischen Blechen besteht.

## Revendications

1. Enjoliveur (1), comprenant une pluralité d'éléments de retenue (4), l'enjoliveur (1) comprend également :
un élément central rotatif (2) pourvu de plusieurs éléments de connexion (3), chaque élément de connexion (3) étant fixé à l'un des éléments de retenue (4), **caractérisé par**
ledit élément rotatif (2) étant rotatif entre une position de repos, dans laquelle les éléments de liaison (3) permettent le mouvement des éléments de retenue (3) vers l'élément rotatif central (2), et une position active, dans laquelle les éléments de liaison (3) poussent les éléments de retenue (4) dans une direction vers le périmètre de l' enjoliveur (1).

2. Enjoliveur (1) selon la revendication 1, dans laquelle les éléments de liaison (3) sont des éléments élastiques.

3. Enjoliveur (1) selon la revendication 1, dans lequel l'élément rotatif (2) comprend un actionneur (7) et un ressort (6), pour faire tourner l'élément rotatif (2) de la position de repos à la position active, ou vice versa.

4. Enjoliveur (1) selon la revendication 1 ou 2, dans lequel les éléments de liaison (3) sont des fils élastiques.

5. Enjoliveur (1) selon la revendication 1, dans lequel les éléments de retenue (4) sont des pièces saillantes.

6. Enjoliveur (1) selon l'une quelconque des revendications précédentes, dans laquelle les éléments de liaison (3) s'étendent radialement depuis l'élément rotatif central (2) jusqu'aux éléments de retenue (4) situés sur le périmètre de l'enjoliveur (1).

7. Enjoliveur (1) selon l'une quelconque des revendications précédentes, dans laquelle les éléments de retenue (4) sont uniformément répartis angulairement par rapport au centre de l'enjoliveur (1).

8. Enjoliveur de roue selon l'une quelconque des revendications précédentes, dans laquelle chacun des éléments de retenue (4) est guidé par un support (12).

9. Enjoliveur selon revendication 8, dans laquelle le support (12) et les éléments de retenue (4) sont fabriqués en une seule pièce de plastique au cours de la même opération d'injection que le reste de l'enjoliveur (1).

10. Enjoliveur (1) selon la revendication 8 ou 9, dans lequel le support (12) est élastique.

11. Enjoliveur (1) selon revendication 10, dans lequel le support (12) est constitué de deux feuilles élastiques.
